# EUROPEAN PATENT APPLICATION

(11) **EP 4 802 936 A1**
(43) Date of publication of application: **09.09.2026**
(21) Application number: 26159210.9
(22) Date of filing: 18.02.2026
(51) Int. Cl.: A41D 13/015, A41D 19/015, A43B 13/18, A43B 13/20, A43B 23/02, A43B 23/04, B29C 64/35, B29C 64/124, B33Y 10/00, B33Y 80/00

(54) **ADDITIVELY MANUFACTURED ARTICLES OF APPAREL WITH INTEGRALLY FORMED CUSHIONING ELEMENTS**

(30) Priority: 07.03.2025 US 202519074014
(71) Applicant: adidas AG, 91074 Herzogenaurach (DE)
(72) Inventor: DELGADO, Christian Manuel Arias, Portland, OR, 97217 (US); CORCORAN-TADD, Fionn, Portland, OR, 97217 (US); PADOVANI, Matteo E., Portland, OR, 97217 (US)
(74) Representative: Bardehle Pagenberg Partnerschaft mbB Patentanwälte Rechtsanwälte

(57) **Abstract**

Articles of apparel comprising an outer skin (116, 600), an inner skin (118, 640), and a core (120, 126) disposed between the outer skin. The outer skin, the inner skin, and the core can be integrally formed. Features of the outer skin, inner skin, and/or core can be manufactured to provide desired properties for the article of apparel, for example cushioning properties. In some embodiments, the article of apparel comprises a glove. In some embodiments, the article of apparel comprises an article of footwear.

## Description

### TECHNICAL FIELD

The present disclosure relates to additively manufactured articles of apparel. In particular embodiments, the present disclosure related relates to additively manufactured gloves and/or footwear.

### BACKGROUND

When designing articles of apparel, for example a glove or footwear, to be used for participation in athletic activities, the use of the apparel when engaging in those activities should be considered. For example, cushioning the hand of a user from impact between an object and a glove worn by the user can be considered. In addition, cushioning a foot of a user from impact between an article of footwear and a ground surface can also be considered. Hence, there is a continuing need for articles of apparel, for example gloves and/or articles of footwear, designed to improve the overall properties of the apparel.

### BRIEF SUMMARY

A first embodiment (I) of the present disclosure is directed to an article of apparel, comprising: an additively manufactured outer skin comprising a cured material; an additively manufactured inner skin located opposite the additively manufactured outer skin and comprising the cured material; an additively manufactured core comprising the cured material and extending between the additively manufactured outer skin and the additively manufactured inner skin; and a pocket at least partially surrounded by the additively manufactured core, the pocket comprising a filler that comprises a partially cured form of the cured material, wherein the additively manufactured outer skin, the additively manufactured inner skin, the additively manufactured core, and the pocket are integrally formed.

In a second embodiment (II), in the article of apparel of the first embodiment (I), each of the additively manufactured outer skin, the additively manufactured inner skin, and the additively manufactured core are stiffer than the filler.

In a third embodiment (III), in the article of apparel of any one of embodiments (I)-(II), the pocket is entirely surrounded by the additively manufactured core.

In a fourth embodiment (IV), in the article of apparel of any one of embodiments (I)-(III), the filler comprises a first section comprising a first partially cured form of the cured material and a second section comprising a second partially cured form of the cured material.

In a fifth embodiment (V), in the article of apparel of the fourth embodiment (IV), the first partially cured form of the cured material and the second partially cured form of the cured material are each cured to different levels.

In a sixth embodiment (VI), the article of apparel of any one of embodiments (I)-(V) is a glove.

In a seventh embodiment (VII), the article of apparel of any one of embodiments (I)-(V) is a shoe.

In an eighth embodiment (VIII), in the article of apparel embodiment (VII), the pocket is located in an upper of the shoe.

A ninth embodiment (IX) of the present disclosure is directed to a method of forming an article of apparel, comprising: forming, using an additive manufacturing process, an outer skin, an inner skin, and a core extending between the outer skin and the inner skin; forming a cushion extending from the outer skin, wherein forming the cushion comprises: forming, using the additive manufacturing process, a pouch comprising a wall portion and an interior cavity, wherein the interior cavity comprises a material in an uncured state and the wall portion comprises the material in at least a partially cured state; forming, using the additive manufacture process, a first valve that extends through the wall portion and into the interior cavity, wherein the first valve permits flow out of the interior cavity; and removing the material in the uncured state from the interior cavity through the first valve.

In a tenth embodiment (X), the method of the ninth embodiment (IX) comprises forming, using the additive manufacturing process, a second valve that extends through the wall portion and into the interior cavity, wherein the second valve permits air to flow into the interior cavity such that air flows into the interior cavity when the material in the uncured state is removed from the interior cavity through the first valve.

In an eleventh embodiment (XI), in the method of the tenth embodiment (X), the first valve and the second valve each comprise a one-way valve.

In a twelfth embodiment (XII), in the method of any of embodiments (IX)-(XI), the pouch comprises a disk shape.

A thirteenth embodiment (XIII) of the present disclosure is directed to an article of apparel, comprising: an additively manufactured outer skin; an additively manufactured inner skin; an additively manufactured core disposed between the additively manufactured outer skin and the additively manufactured inner skin and extending from the additively manufactured inner skin and toward the additively manufactured outer skin; and a cushion extending from the additively manufactured outer skin, the cushion comprising: an additively manufactured pouch comprising a wall and an interior cavity, and an additively manufactured first valve extending through the wall and into the interior cavity, wherein the additively manufactured first valve permits flow out of the interior cavity.

In a fourteenth embodiment (XIV), in the article of apparel of the thirteenth embodiment (XIII), the cushion comprises an additively manufactured second valve extending through the wall and into the interior cavity, wherein the additively manufactured second valve permits flow into the interior cavity.

In a fifteenth embodiment (XV), in the article of apparel of the fourteenth embodiment (XIV), each of the additively manufactured first valve and the additively manufactured second valve comprise a one-way valve.

In a sixteenth embodiment (XVI), in the article of apparel of any one of embodiments (XIII)-(XIV), the additively manufactured pouch comprises a disk shape.

In a seventeenth embodiment (XVII), in the article of apparel of any one of embodiments (XIII)-(XVI), the interior cavity is at least partially filled with a resin.

In an eighteenth embodiment (XVIII), the article of apparel of any one of embodiments (XIII)-(XVII) is a glove.

In a nineteenth embodiment (XIX), the article of apparel of any one of embodiments (XIII)-(XVII) is a shoe.

In a twentieth embodiment (XX), in the article of apparel of the nineteenth embodiment (XVIII), the additively manufactured pouch is located in a sole of the shoe.

### BRIEF DESCRIPTION OF THE DRAWINGS/FIGURES

FIG. 1A shows a glove, according to some embodiments.
FIG. 1B shows a cross-sectional view of the glove of FIG. 1A, according to some embodiments.
FIG. 1C shows a cross-sectional view of the glove of FIG. 1A, according to some embodiments.
FIG. 2A shows a glove, according to some embodiments.
FIGS. 2B shows a cross-sectional view of the glove of FIG. 2A, according to some embodiments.
FIG. 2C shows a cross-sectional view of the glove of FIG. 2A, according to some embodiments.
FIG. 2D shows a filler, according to some embodiments.
FIG. 3A shows a glove, according to some embodiments.
FIG. 3B shows a cross-sectional view of the glove of FIG. 3A, according to some embodiments.
FIG. 4 shows a flowchart of a method for forming a glove, according to some embodiments.
FIG. 5 shows an article of footwear, according to some embodiments.
FIG. 6 shows a side view of the article of footwear of FIG. 5, according to some embodiments
FIG. 7 shows a cross-sectional view of the article of footwear of FIG. 5, according to some embodiments.

### DETAILED DESCRIPTION

The indefinite articles "a," "an," and "the" include plural referents unless clearly contradicted or the context clearly dictates otherwise.

As used herein, unless specified otherwise, references to "first," "second," "third," "fourth," etc. are not intended to denote order, or that an earlier-numbered feature is required for a later-numbered feature. Also, unless specified otherwise, the use of "first," "second," "third," "fourth," etc. does not necessarily mean that the "first," "second," "third," "fourth," etc. features have different properties or values.

As used herein, unless specified otherwise, reference to two or more values being "approximately equal" refers to instances in which the two or more values are equal or within 10 percent of being equal. For example, values between 9 and 11 are considered approximately equal to a stated value of 10.

The term "comprising" is an open-ended transitional phrase. A list of elements following the transitional phrase "comprising" is a non-exclusive list, such that elements in addition to those specifically recited in the list can also be present. The phrase "consisting essentially of" limits the composition of a component to the specified materials and those that do not materially affect the basic and novel characteristic(s) of the component. The phrase "consisting of" limits the composition of a component to the specified materials and excludes any material not specified.

Where a range of numerical values comprising upper and lower values is recited herein, unless otherwise stated in specific circumstances, the range is intended to include the endpoints thereof, and all integers and fractions within the range. It is not intended that the disclosure or claims be limited to the specific values recited when defining a range. Further, when an amount, concentration, or other value or parameter is given as a range, one or more ranges, or as list of upper values and lower values, this is to be understood as specifically disclosing all ranges formed from any pair of any upper range limit or value and any lower range limit or value, regardless of whether such pairs are separately disclosed.

Articles of apparel can be worn during athletic activity. Many athletic activities have instances in which there is an impact between objects. For example, there can be an impact between a ball (for example, a football, a soccer ball, a basketball, etc.) and a user (for example, the hands, feet, or other body parts of the user). There can also be an impact between a surface (for example, the ground, another user, etc.) and the user (for example, the hands, feet, or other body parts of the user). In some instances, these impacts can negatively affect performance of a user. For example, a user can sustain an injury from one or more of the impacts described, thereby limiting participation in the activity. A user can also perform poorly as a result of the impact (for example, not catching a ball, slipping on a surface, etc.). Thus, there is a need to absorb at least a portion of the energy imparted to a user by impacts experienced while participating in an athletic activity.

Conventional gloves used for athletic activities can provide some advantages for a user during an athletic activity. However, conventional gloves also have some disadvantages. For example, some conventional gloves can provide additional protection at specific portions of the gloves, however the overall performance and function of the gloves can be negatively impacted by the additional protection. Conventional articles of footwear for athletic activities can also provide some advantages for a user during athletic activities. However, conventional articles of footwear also have some disadvantages. For example, some conventional articles of footwear can provide some cushioning for the foot of the wearer, however the cushioning provided may be suboptimal for specific use cases or athletic activities.

Articles of apparel, for example gloves and/or articles of footwear according to embodiments of the present application, are designed to provide various advantageous effects for a user. The articles of apparel can facilitate increased athletic performance for a wearer participating in a sport, for example football, American football, hockey, baseball, or any other type of sport.

As used herein, "apparel" can be any item that is worn or adorns an individual, including both clothing and accessories. Clothing can comprise, but is not limited to pants, shorts, leggings, socks, a shoe (which can refer any type of footwear, including a sneaker, a cleat, a boot, a slipper, a flip-flop, a sandal, etc.), a shoe upper, a shoe sole, a jacket, a coat, a hat, a sleeve, a sweater, a shirt, a bra, a jersey, a bootie, a glove, an arm sleeve, a knee sleeve, an elbow sleeve, a wrist sleeve, an ankle sleeve. Accessories can comprise, but are not limited to a headband, a waistband, a belt, a wristband, a bracelet, a watch band, a shoulder wrap, a tape, a shin guard, a hat, a tie, a scarf, a purse, a handbag, a wallet, a knapsack, or a backpack. While various embodiments are discussed herein in the context of gloves, features of the embodiments can be applied to other articles of apparel, or portions thereof.

Article of apparel according to embodiments of the present application are designed to at least partially address and/or pursue these problems with conventional articles of apparel and to provide various advantageous effects for a user. In particular, gloves according to embodiments of the present application can provide additional support and/or cushioning in particular areas of the glove to at least partially absorb an impact force. Articles of apparel, for example gloves, according to embodiments of the present application can provide pockets or pouches on the article of apparel to at least partially absorb an impact force. The pockets or pouches can be formed integrally with the article of apparel such that the article of apparel and the pockets or pouches form a single part. Furthermore, articles of footwear according to embodiments of the present application can provide additional support and/or cushioning in particular areas of the article of footwear to at least partially absorb and impact force. In some embodiments, articles of footwear according to embodiments of the present application can provide pockets or pouches to at least partially absorb an impact force. The pockets or pouches provided on or in articles of footwear disclosed herein can be formed integrally with the articles of footwear. Integrally forming the pockets or pouches with the articles as described herein can provide advantageous effects. For example, the risk of the pockets or pouches detaching from the articles is reduced as compared to pockets or pouches that are produced separately and secured to the articles. Additionally, relative movement between the pockets or pouches and the rest of the article is reduced as compared to pockets or pouches that are produced separately and secure to the articles.

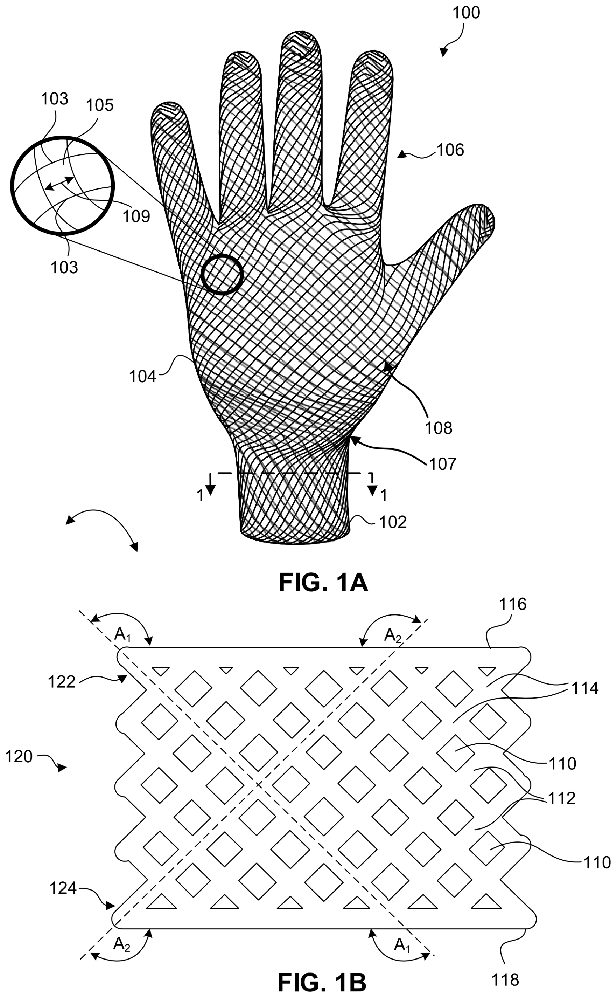

FIG. 1A shows a glove 100, according to some embodiments. In some embodiments, the glove 100 can comprise a glove used for athletic competition. For example, the glove 100 can comprise an athletic glove used for football, American football, hockey, baseball, softball, etc. Glove 100 can comprise any combination of structures or features described herein. For example, glove 100 can comprise one or more features of glove 200 and/or glove 300.

The glove 100 can comprise a wrist portion 102, a central portion 104, and finger portions 106. In some embodiments, the wrist portion 102, the central portion 104, and the finger portions 106 can be integrally formed as a single part. Examples of manufacturing techniques that can be used to form components in the form of a single, integral part comprise molding, casting, and additive manufacturing (three-dimensional (3-D) printing). In some embodiments, the wrist portion 102 can comprise a braided 3-D printed structure (for example, the wrist portion 102 can comprise strands of 3-D printed structures that can be braided together to form the wrist portion 102). Accordingly, any component or portion of gloves described herein can be an integrally formed glove part that connects to one or more other integrally formed glove parts as described herein. In some embodiments, any of the gloves described herein can comprise a pre-formed shape such that the hand of the user takes the preformed shape when the user is wearing the glove and the hand is at rest. For example, any of the gloves described herein can comprise a shape in which one or more of the fingers are flexed toward the palm portion, away from the palm portion, or a combination thereof.

Exemplary additive manufacturing techniques include for example, selective laser sintering, selective laser melting, selective heat sintering, stereo lithography, fused deposition modeling, or 3-D printing in general. Various additive manufacturing techniques related to articles of footwear are described for example in US 2009/0126225, WO 2010/126708, US 2014/0300676, US 2014/0300675, US 2014/0299009, US 2014/0026773, US 2014/0029030, WO 2014/008331, WO 2014/015037, US 2014/0020191, EP 2564719, EP 2424398, and US 2012/0117825. In some embodiments, the additive manufacturing process can include a continuous liquid interface production process. For example, the additive manufacturing process can include a continuous liquid interface production process as described in U.S. Pat. No. 9,453,142, issued on September 27, 2016, which is hereby incorporated in its entirety by reference thereto.

In some embodiments, 3-D printing a glove, or a component thereof, can comprise 3-D printing the glove or component in an intermediate green state, shaping and/or assembling the glove or component in the green state, and curing the green state in its final shape. In some embodiments, 3-D printing a glove, or component thereof, can comprise 3-D printing the glove or component thereof in an intermediate green state, expanding and/or assembling the intermediate green state, and curing the green state in its final shape. In some embodiments, 3-D printing a glove, or component thereof, can comprise 3-D printing the glove or component in an intermediate green state, expanding and/or assembling the intermediate green state, shaping the article or component in the green state, and curing the green state in its final shape.

In some embodiments, 3-D printing a glove, or component thereof, can comprise 3-D printing multiple components in an intermediate green state, shaping and/or assembling the components in the green state, and curing the green state in its final shape. In some embodiments, 3-D printing a glove, or component thereof, can comprise 3-D printing multiple components in an intermediate green state, expanding and/or assembling the components in the green state, and curing the green state in its final shape.

Techniques for producing an intermediate green state object from resins by additive manufacturing are known. Suitable techniques include bottom-up and top-down additive manufacturing, generally known as stereolithography. Such methods are known and described in, for example, U.S. Patent No. 5,236,637 to Hull, US Patent Nos. 5,391,072 and 5,529,473 to Lawton, U.S. Patent No. 7,438,846 to John, US Patent No. 7,892,474 to Shkolnik, U.S. Patent No. 8,110,135 to El-Siblani, U.S. Patent Application Publication No. 2013/0292862 to Joyce, and US Patent Application Publication No. 2013/0295212 to Chen et al. The disclosures of these patents and applications are incorporated by reference herein in their entirety.

In some embodiments, the additive manufacturing step can be carried out by one of the family of methods sometimes referred to as continuous liquid interface production (CLIP). CLIP is known and described in, for example, US Patent Nos. 9,211,678; 9,205,601; 9,216,546; and others; in J. Tumbleston et al., Continuous liquid interface production of 3D Objects, Science 347, 1349-1352 (2015); and in R. Janusziewcz et al., Layerless fabrication with continuous liquid interface production, Proc. Natl. Acad. Sci. USA 113, 11703-11708 (October 18, 2016). Other examples of methods and apparatus for carrying out particular embodiments of CLIP include, but are not limited to: Batchelder et al., US Patent Application Pub. No. US 2017/0129169 (May 11, 2017); Sun and Lichkus, US Patent Application Pub. No. US 2016/0288376 (Oct. 6, 2016); Willis et al., US Patent Application Pub. No. US 2015/0360419 (Dec. 17, 2015); Lin et al., US Patent Application Pub. No. US 2015/0331402 (Nov. 19, 2015); D. Castanon, US Patent Application Pub. No. US 2017/0129167 (May 11, 2017). B. Feller, US Pat App. Pub. No. US 2018/0243976 (published Aug 30, 2018); M. Panzer and J. Tumbleston, US Pat App Pub. No. US 2018/0126630 (published May 10, 2018); K. Willis and B. Adzima, US Pat App Pub. No. US 2018/0290374 (Oct. 11, 2018) L. Robeson et al., PCT Patent Pub. No. WO 2015/164234 (see also US Patent Nos. 10,259,171 and 10,434,706); and C. Mirkin et al., PCT Patent Pub. No. WO 2017/210298 (see also US Pat. App. US 2019/0160733). The disclosures of these patents and applications are incorporated by reference herein in their entirety.

While stereolithography techniques such as CLIP can be preferred, it will be appreciated that other additive manufacturing techniques, such as jet printing (see, e.g., US Patent No. 6,259,962 to Gothait and US Patent App. Serial No. US 2020/0156308 to Ramos et al.), can also be used.

In some embodiments, any component of a glove described herein (for example, the wrist portion 102, the central portion 104, the finger portions 106, etc.) can comprise a three-dimensional mesh comprising a plurality of interconnected unit cells. In some embodiments, multiple components of gloves described herein can comprise a three-dimensional mesh comprising a plurality of interconnected unit cells, with each unit cell comprising a plurality of unit cell struts defining a three-dimensional structure and a plurality of nodes at which one or more unit cell struts are connected. As a nonlimiting example shown in FIG. 1A, one or more of the wrist portion 102, the central portion 104, or the finger portions 106 can comprise a three-dimensional mesh 108 comprising interconnected unit cells 110 (as shown in FIG. 1B). In some embodiments, the interconnected unit cells 110 can comprise struts 112 defining a three-dimensional structure and nodes 114 at which the struts 112 are connected (as shown in FIG. 1B).

As used herein, the term three-dimensional mesh refers to a three-dimensional structure comprising the unit cells 110 arranged in a web-like structure or a lattice structure. The web-like or lattice structure of a three-dimensional mesh can comprise interconnected structural members (for example, the struts 112 or ribbons) defining the unit cells 110. In embodiments comprising the struts 112, the struts 112, and thus the unit cells 110, can be connected at the nodes 114. For example, the struts 112 can be connected at the nodes 114 and define the unit cells 110 arranged in a lattice configuration. In some embodiments, the unit cells 110 can be arranged in a regular or repeating lattice configuration. In some embodiments, the three-dimensional mesh 108 can be an additively manufactured (3-D printed) structure. Exemplary lattice configurations can include, but are not limited to, basic cubic lattices, body-centered cubic lattices, face-centered cubic lattices, and modified lattices based on these lattice types. Exemplary lattice configurations can include, but are not limited to the lattice structures described in U.S. Patent Application Nos. 17/069,623 and 18/313,135, which are hereby incorporated by reference in their entireties.

The unit cells 110 can have various dimensions and geometries. Further, the unit cells 110 within a three-dimensional mesh can be the same or can differ. Thus, the three-dimensional mesh 108 can comprise unit cells 110 of different dimensions or geometries. The three-dimensional shape of a unit cell 110 can be defined by the struts 112 connected to one another at the nodes 114. In such embodiments, each of the unit cells 110 can have a base geometry (for example, three-dimensional shape, connection, and arrangement of the struts 112 defining the unit cells 110). The base geometry of the unit cells 110 can be, but is not limited to, a dodecahedron (e.g., rhombic), a tetrahedron, an icosahedron, a cube, a cuboid, a prism, or a parallelepiped. Each node 114 can connect two or more of the struts 112.

In some embodiments, the unit cells 110 can comprise a solid representation of a repeating implicit surface of a lattice structure. In such embodiments, the unit cells 110 can comprise a "base surface geometry" defined by the base three-dimensional shape of a body formed by one or more ribbons (walls) of material that define a solid representation of an implicit surface for a full unit cell 110. In some embodiments, the implicit surface can be a periodic implicit surface such that the base surface geometry of each unit cell 110 contacts the base surface geometry of at least some adjacent unit cells 110 to create a lattice. One example of a suitable periodic surface is a gyroid, but any type of suitable periodic surface can be used.

Herein, a solid representation of an implicit surface refers to a solid object following the shape of an implicit surface. Whereas an actual implicit surface has no thickness, a solid representation of an implicit surface has a thickness on one or both sides of the actual implicit surface in a three dimensional space. The thickness gives the solid representation volume, meaning the solid representation can be built as a physical object from physical material. The added thickness or thicknesses can be uniform, or at least approximately uniform notwithstanding fillets or local deformities, and thin in comparison to the overall size of the represented implicit surface. In some embodiments, the relative density of a unit cell of the solid representation can be from 5% to 30%, from 5% to 40%, from 10% to 25%, or from 15% to 20%. The term "relative density" as used herein refers to an amount of a unit cell occupied by solid material as a percentage of a total volume of the unit cell.

In some embodiments, the implicit surfaces can be created using a combination of random Fourier series functions, in which linear and/or nonlinear coefficients as well as linear and nonlinear variables inside sine and cosine terms over the x, y and z space are iterated to generate the functions. The resulting unit cells can have different planes of symmetry, such as, in various examples, zero planes of symmetry, one plane of symmetry, or more than one plane of symmetry. The function can be derived in a way that satisfies the periodicity of the unit cell. Criteria for the selection of an applicable implicit surface within the design space domain can include any one or any combination of number of terms in the equation, number of connected components, the edge boundary length, surface area, and volume fraction.

Additive manufacturing processes can create components that are a single piece. For example, an additive manufacturing process can create components that are continuous and do not comprise any seams or other types of material discontinuities. Thus, at least one of the parts or portions of gloves described herein (for example, the wrist portion 102, the central portion 104, the finger portions 106, etc.) can be a single piece.

In some embodiments, various parts of glove 100 can be customized to a wearer's liking. For example, the wearer can customize two or more of the wrist portion 102, the central portion 104, or the finger portions 106 to have shapes, sizes, colors, and performance characteristics that meet desired requirements of the wearer. For example, the wearer can choose to customize the portions of the glove 100 to be softer and more flexible for greater comfort. The wearer can also choose to customize the portions of the glove 100 to be stiffer for better performance when, for example, catching a ball, blocking a ball, etc. In some embodiments, each of the portions of the glove 100 can be formed of smaller parts that can each be customized according to the preferences of the wearer.

FIG. 1B shows a cross-sectional view across 1-1 of the glove 100 of FIG. 1A, according to some embodiments. In some embodiments, all or a portion of the structure of the glove 100 can comprise an outer skin 116, an inner skin 118, and a core 120 disposed between the outer skin 116 and the inner skin 118 and extending between the outer skin 116 and the inner skin 118. In some embodiments, the inner skin 118 can be omitted such that the structure of the glove 100 can comprise the outer skin 116 and the core 120. In some embodiments, the outer skin 116 can be omitted such that the structure of the glove 100 can comprise the inner skin 118 and the core 120. In some embodiments, both the outer skin 116 and the inner skin 118 can be omitted such that the structure of the glove 100 can comprise the core 120.

In some embodiments, the outer skin 116, the inner skin 118, the core 120, or a combination thereof can be additively manufactured. In some embodiments, the outer skin 116, the inner skin 118, the core 120, or a combination thereof can be integrally formed as a single part. In some embodiments, the outer skin 116, the inner skin 118, the core 120, or a combination thereof can be additively manufactured from a curable resin. In some embodiments, the outer skin 116, the inner skin 118, the core 120, or a combination thereof can be formed separately and then joined, for example, during a curing process.

In some embodiments, the struts 112 can comprise a first group 122 and a second group 124. In some embodiments, the first group 122 of the struts 112 can be oriented at a first angle A₁ relative to the outer skin 116 and the inner skin 118. In some embodiments, the second group 124 of the struts 112 can be oriented at a second angle A₂ relative to the outer skin 116 and the inner skin 118. In some embodiments, the first angle A₁ and the second angle A₂ can be approximately equal. In some embodiments, the first angle A₁ and the second angle A₂ can be different (for example, at least 5% different from each other). In some embodiments, the first group 122 of the struts 112 can be oriented perpendicular to the outer skin 116 and the inner skin 118, and the second group 124 of the struts 112 can be oriented parallel to the outer skin 116 and the inner skin 118. In some embodiments, the first group 122 of the struts 112 can be oriented perpendicular to the outer skin 116 and the inner skin 118, and the second group 124 of the struts 112 can be oriented at an angle between 0 and 90 degrees relative to the outer skin 116 and the inner skin 118.

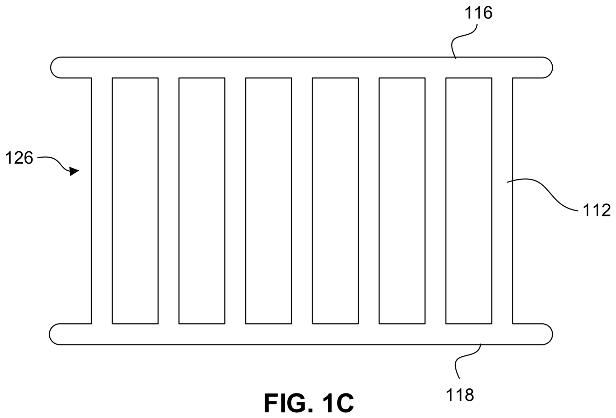

FIG. 1C shows a cross-sectional view across 1-1 of the glove 100 of FIG. 1A, according to some embodiments. In some embodiments, all or a portion of the structure of the glove 100 can comprise the outer skin 116, the inner skin 118, and a core 126 disposed between the outer skin 116 and the inner skin 118 and extending between the outer skin 116 and the inner skin 118. In some embodiments, the inner skin 118 can be omitted such that the structure of the glove 100 can comprise the outer skin 116 and the core 126. In some embodiments, the outer skin 116 can be omitted such that the structure of the glove 100 can comprise the inner skin 118 and the core 126.

The core 126 can comprise struts 112 oriented perpendicular to the outer skin 116, the inner skin 118, or both. In some embodiments, the struts 112 of core 126 can be oriented at an angle between 0 and 90 degrees relative to the outer skin 116 and the inner skin 118. Thus, in such embodiments, the core 126 may not comprise unit cells. Struts 112 of the core 126 can comprise opposing ends directly coupled to outer skin 116 and inner skin 118, respectively.

In some embodiments, the outer skin 116, inner skin 118, or both can be devoid of unit cells 110. In some embodiments, the outer skin 116, inner skin 118, or both can comprise a plurality of continuous beams 103 (shown in FIG. 1A) extending adjacent to each other and defining at least part of the glove 100. For example, the plurality of continuous beams 103 can define at least part of the wrist portion 102, the central portion 104, the finger portions 106, or a combination thereof. Adjacent continuous beams 103 can be separated by spaces 105 along at least a portion of the wrist portion 102, the central portion 104, the finger portions 106, or a combination thereof. Continuous beams 103 of the outer skin 116 and/or inner skin 118 may not define a portion of a repeating unit cell (for example, a unit cell 110 as described herein). In embodiments comprising struts 112, struts 112 can extend from a continuous beam 103 of outer skin 116 to a continuous beam 103 of inner skin 118. Alternatively, in some embodiments, all or a portion of outer skin 116, inner skin 118, or both can comprise a continuous, non-porous skin.

In embodiments comprising continuous beams 103, a surface contour of all or a portion of glove 100 (for example, a surface contour of wrist portion 102, central portion 104, finger portions 106, or a combination thereof) can be defined the continuous beams 103. In such embodiments, grooves or recesses between continuous beams 103 do not define the shape of the surface contour. Rather, the surface contour is characterized by the overall outmost shape of wrist portion 102, central portion 104, and/or finger portions 106 defined by inner skin 118, outer skin 116, or both. The surface contour defined by the inner skin 118 is the surface contour facing a wearer's hand during use. The surface contour defined by the outer skin 116 is the surface contour facing away from a wearer's hand during use.

In some embodiments, continuous beams 103 can extend continuously at the surface contour, with the plurality of continuous beams 103 extending continuously along wrist portion 102, central portion 104, and/or finger portions 106. In some embodiments, one or more continuous beams 103 can extend continuously along a distance of at least 5 centimeters. In some embodiments, one or more of the continuous beams 103 can extend continuously along a distance of at least 10 centimeters. In some embodiments, one or more of the continuous beams 103 can extend continuously along a distance of at least 15 centimeters. In some embodiments, one or more of the continuous beams 103 can extend continuously in a straight line. In some embodiments, one or more of the continuous beams 103 can extend continuously in a curved line.

In some embodiments, adjacent continuous beams of the plurality of continuous beams 103 can extend substantially parallel to each other at the surface contour. As used herein, "substantially parallel" means that two or more of the continuous beams 103 either: (i) extend along straight or curved lines that are exactly a parallel to each other for a specified length, or (ii) extend along straight or curved lines that extend +/- 10 degrees relative to parallel of each other for a specified length. In some embodiments, the specified length can be at least can be at least 5 mm, at least 10 mm, or at least 15 mm.

In embodiments comprising the plurality of continuous beams 103 that extend substantially parallel to each other at the surface contour, the plurality of continuous beams 103 can define a lenticular structure at the surface contour.

Adjacent continuous beams 103 extending at the surface contour can be spaced apart from each other by the space 105, as illustrated in for example FIG. 1A. In some embodiments, the space 105 can comprise a spacing distance 109 between adjacent continuous beams 103 that can range from greater than or equal to 0.1 mm to less than or equal to 10 mm.

In some embodiments, the spacing distance 109 between two adjacent continuous beams 103 can be constant along a specified length, for example at least 5 mm, at least 10 mm, or at least 15 mm. In such embodiments, the two adjacent continuous beams 103 can extend along straight or curved lines that are exactly a parallel to each other for the specified length.

In some embodiments, the spacing distance 109 between two adjacent continuous beams 103 can vary along the inner skin 118 or outer skin 116. In such embodiments, the two adjacent continuous beams 103 can extend along straight or curved lines that are not exactly parallel to each other for a specified length. In some embodiments, inner skin 118 or outer skin 116 can comprise one or more zones 107 where the spacing distance 109 between two or more adjacent continuous beams 103 is zero. In such embodiments, the two or more adjacent continuous beams 103 can merge together at the surface contour. In some embodiments, the two or more adjacent continuous beams 103 can be spaced apart as the continuous beams 103 approach the zone 107, merge in the zone 107, and then diverge in a spaced apart relationship after the zone 107. In some embodiments, the zone 107 can comprise three or more, four or more, or five or more adjacent beams 103 that merge together.

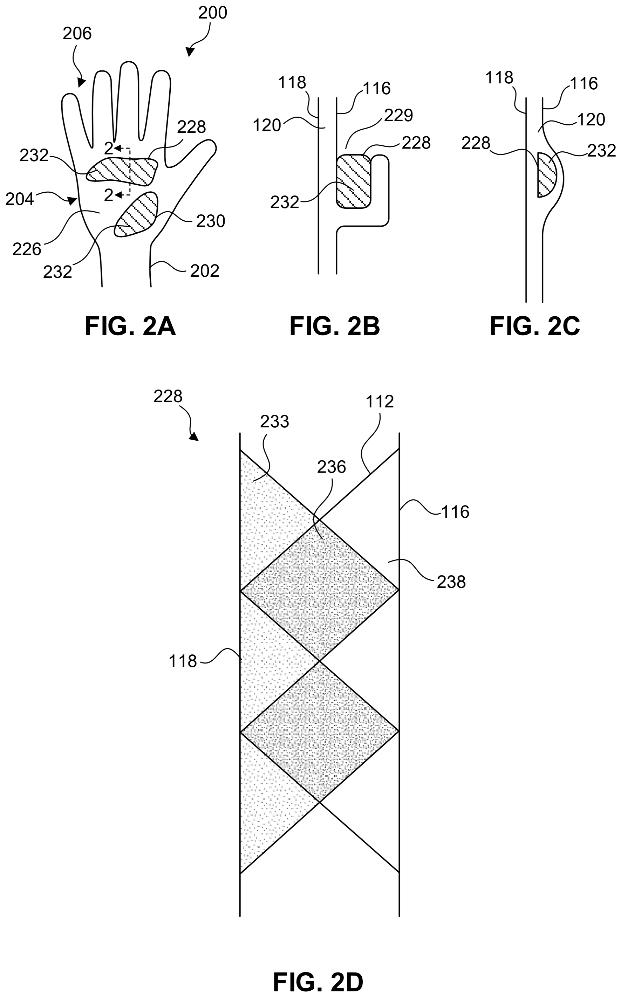

Gloves used during an athletic competition are subjected to various external forces during use. For example, the glove can be subjected to an impact from an object such as a ball. As another example, the glove can be subjected to an impact from a surface (for example, the user can brace against a fall by pressing the glove against the ground). In some embodiments, the glove according to embodiments of the present application can comprise structures to provide a cushion for such impacts. For example, FIG. 2A shows a glove 200, according to some embodiments. In some embodiments, the glove 200 can be similar to the glove 100 aside from the differences noted herein. For example, the glove 200 can be additively manufactured and comprise a wrist portion 202, a central portion 204, and finger portions 206 that are similar to the wrist portion 102, the central portion 104, and the finger portions 106 of FIG. 1A aside from the differences described herein.

In some embodiments, the central portion 204 can comprise a palm portion 226. In some embodiments, the palm portion 226 can comprise one or more pockets that can provide a cushion against the impacts described above. In some embodiments, the finger portions 206 and/or the wrist portion 202 can comprise one or more pockets that can provide a cushion against the impacts described above. In some embodiments, the one or more pockets can comprise a first pocket 228 and a second pocket 230. In some embodiments, more or fewer pockets can be implemented. In some embodiments, the first pocket 228 and the second pocket 230 can be arranged in areas most likely to be subjected to an impact. For example, the first pocket 228 can be arranged in an area adjacent to the finger portions 206 and the second pocket 230 can be arranged in an area adjacent to the wrist portion 202. In some embodiments, the first pocket 228 and the second pocket 230 can comprise a filler 232 that can at least partially absorb a force imparted to the first pocket 228 and the second pocket 230 to at least partially dissipate the energy associated with the force. In some embodiments, the filler 232 can comprise a material that is softer than the wrist portion 202, the central portion 204, or the finger portions 206. In some embodiments, the filler 232 can comprise a partially cured material. In some embodiments, the partially cured material can be a partially cured form of the same material forming the wrist portion 202, the central portion 204, and/or the finger portions 206. For example, in some embodiments, the wrist portion 202, the central portion 204, and the finger portions 206 can comprise a cured material and the filler 232 of the first pocket 228, the second pocket 230, or both can comprise a partially cured form of the cured material. In some embodiments, the partially cured material can be a partially cured resin (for example, used during an additive manufacturing process). In some embodiments, the partially cured material can be a partially cured powder (for example, a powder material used in a selective laser sintering process, such as nylon, polypropylene, thermoplastic polyurethane, etc.). In some embodiments, the partially cured material can be a partially cured liquid (for example, a partially cured rubber, silicone, foam, or plastic used during a rapid liquid print process).

FIGS. 2B-2C show a cross-sectional view across 2-2 of the palm portion 226 of the glove 200, according to some embodiments. Though the description below is directed to the first pocket 228, the description below can also apply to the second pocket 230. In some embodiments, the core 120 can define all or a portion of the first pocket 228.

In some embodiments (such as shown in FIG. 2B), the first pocket 228 can be partially surrounded by the core 120, the outer skin 116, the inner skin 118, or a combination thereof. For example, the glove 200 can comprise an opening 229 such that a portion of the first pocket 228 can be exposed to the external environment. In some embodiments, as shown for example in FIG. 2B, the first pocket 228 can extend from outer skin 116. In some embodiments, the first pocket 228 can extend from inner skin 118.

In some embodiments (such as shown in FIG. 2C), the first pocket 228 can be entirely surrounded by the core 120 (or core 126), the inner skin 118, the outer skin 116, or a combination thereof. In such embodiments, core 120 can define all or a portion of the first pocket 228 between the outer skin 116 and the inner skin 118. In some embodiments, the filler 232 can be trapped within the structure of the core 120 or the core 126. For example, in some embodiments, the filler 232 can be trapped within the open structure defined by the struts 112 of the core 120 or the core 126.

In some embodiments, the outer skin 116, the inner skin 118, the core 120/126, and the first pocket 228 can be integrally formed as a single part. For example, the outer skin 116, the inner skin 118, the core 120/126, and the first pocket 228 can be integrally formed during an additive manufacturing process.

In some embodiments, the outer skin 116, the inner skin 118, and the core 120/126 can be stiffer than the filler 232. For example, the outer skin 116, the inner skin 118, and the core 120/126 can comprise the cured material, and the filler 232 can comprise a partially cured form of the cured material. In such embodiments, the cured material can comprise a solid material and the partially cured material can comprise a solid material, a semi-solid material, or a liquid material, where the solid material of the cured material is stiffer than the solid material, semi-solid material, or liquid material of the filler 232.

FIG. 2D shows the first pocket 228 of FIGS. 2A-2C, according to some embodiments. In some embodiments, the first pocket 228 can comprise different sections that comprise forms of the cured resin cured to different levels. For example, in some embodiments, the first pocket 228 can comprise a first section 233, a second section 236, and a third section 238. In some embodiments, the first pocket 228 can comprise more or fewer sections. In some embodiments, the first section 233, the second section 236, and the third section 238 can be separated by the struts 112.

In some embodiments, the first section 233, the second section 236, and the third section 238 can each comprise forms of the cured resin (for example, forms of the cured resin that form the outer skin 116, the inner skin 118, and the core 120) cured to different levels. In some embodiments, the first section 233 can comprise a first partially cured form of the cured resin, the second section 236 can comprise a second partially cured form of the cured resin, and the third section 238 can comprise a third partially cured form of the cured resin. In some embodiments, each of the first partially cured form of the cured resin, the second partially cured form of the cured resin, and the third partially cured form of the cured resin can comprise different partially cured forms of the cured resin. For example, the first partially cured form of the cured resin can be cured for a first duration, the second partially cured form of the cured resin can be cured for a second duration, and the third partially cured form of the resin can be cured for a third duration, where the first duration, the second duration, and the third duration are different. In some embodiments, at least two of the first partially cured form of the cured resin, the second partially cured form of the cured resin, and the third partially cured form of the cured resin can comprise different partially cured forms of the cured resin.

In some embodiments, each of the partially cured forms of the cured resin can comprise stiffnesses that correspond to the curing duration, where a longer curing duration provides a higher stiffness. In some embodiments, the highest stiffness corresponds to the curing duration for the cured resin, and the curing durations for the partially cured resins comprise curing durations that are shorter than the curing duration for the cured resin. In some embodiments, the first partially cured form of the cured resin can comprise a first stiffness, the second partially cured form of the cured resin can comprise a second stiffness, and the third partially cured form of the cured resin can comprise a third stiffness, where the stiffness of the cured resin is greater than each of the first stiffness, the second stiffness, and the third stiffness.

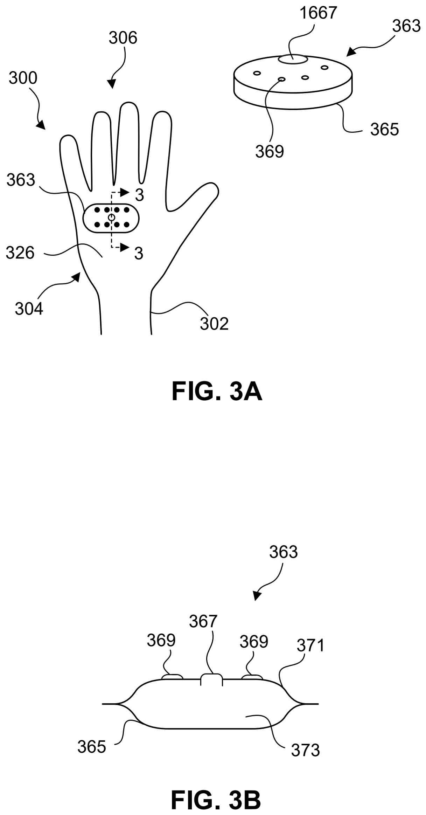

FIG. 3A shows a glove 300, according to some embodiments. In some embodiments, the glove 300 can be similar to any of the gloves previously described, aside from the differences disclosed herein. In some embodiments, the glove 300 can comprise a wrist portion 302, a central portion 304 that comprises a palm portion 326, and finger portions 306. In some embodiments, the glove 300 can comprise the outer skin 116, the inner skin 118, and a core (for example, any of the cores previously described, aside from differences noted herein). In some embodiments, the outer skin 116, the inner skin 118, the core, or a combination thereof can be additively manufactured and integrally formed as a single part.

Glove 300 can comprise a cushion 363. In some embodiments, the core of glove 300 can comprise the cushion 363. In some embodiments, the cushion 363 can be integrally formed with the core. In some embodiments, the cushion 363 can extend from the outer skin 116. In some embodiments, the cushion 363 can be integrally formed with the outer skin 116. In some embodiments, the cushion 363 can extend from the inner skin 118. In some embodiments, the cushion 363 can be integrally formed with the inner skin 118. In some embodiments, the cushion 363 can be additively manufactured. In some embodiments, the cushion 363 can comprise a disk shape. In some embodiments, the cushion 363 can comprise other shapes (for example, circular, square, or other symmetric or non-symmetric shapes).

FIG. 3B shows a cross-sectional view along 3-3 of the cushion 363. In some embodiments, the cushion 363 can comprise a pouch 365. In some embodiments, the pouch 365 can comprise a wall 371 and an interior cavity 373 defined by the wall 371. In some embodiments, the cushion 363 can comprise a first valve 367 extending through the wall 371 and into the interior cavity 373. In some embodiments, the first valve 367 can be integrally formed with the cushion 363 as a single part. In some embodiments, the first valve 367 can be additively manufactured. In some embodiments, the first valve 367 can permit flow out of the interior cavity 373.

In some embodiments, the cushion 363 can comprise a second valve 369 extending through the wall 371 and into the interior cavity 373. In some embodiments, the second valve 369 can be integrally formed with the cushion 363 as a single part. In some embodiments, the second valve 369 can be additively manufactured. In some embodiments, the second valve 369 can permit flow into the interior cavity 373.

In some embodiments, the first valve 367 can permit flow of uncured or partially cured forms of the cured resin of the glove 300 out of the cushion 363, and the second valve 369 can permit flow of air into the into the cushion 363. For example, the wall 371 can comprise a cured resin and the interior cavity 373 can comprise an uncured or partially cured form of the cured resin. The uncured or partially cured form of the cured resin can be at least partially removed from the interior cavity 373 through the first valve 367 (for example, by pressing on the cushion 363 to force the uncured or partially cured form of the cured resin through the first valve 367). In some embodiments, as the uncured or partially cured resin is removed from the interior cavity 373, air can fill the interior cavity 373 through the second valve 369 such that, after at least partially removing the uncured or partially cured resin from the interior cavity 373, the interior cavity 373 can be at least partially filled with air.

In some embodiments, the first valve 367 and the second valve 369 can each comprise a one-way valve. In some embodiments, a force can be imparted to the cushion 363 (for example, by an impact from an object such as a ball) when the interior cavity 373 is at least partially filled with air. The cushion 363 can at least partially absorb some of the energy associated with the force. For example, at least some air can be allowed to escape through the first valve 367 to at least partially absorb some of the energy associated with the impact. After the force is removed, air can fill the interior cavity 373 of the cushion 363 through the second valve 369 to prepare the cushion 363 to receive another force.

In some embodiments, the second valve 369 can be used to fill the interior cavity 1673 with an additional material other than air or the uncured or partially cured resin. For example, the second valve 369 can draw the additional material into the interior cavity 373 instead of air when the uncured or partially cured resin is removed from the interior cavity 373. In some embodiments, the additional material can comprise different energy absorption properties as compared to the energy absorption properties of air or the uncured or partially cured resin. In some embodiments, the additional material can comprise a foam material. In some embodiments, the additional material can comprise a liquid material. In some embodiments, the liquid material can be cured. In some embodiments, the liquid material can remain a liquid within the interior cavity 373. In some embodiments, the additional material comprises a property (for example, viscosity, density, etc.) that prevents the additional material from escaping through the first valve 367 when the cushion 363 is compressed by, for example, a ball. In some embodiments, the first valve 367 can be disabled (for example, sealed, shut off, etc.) after the interior cavity 373 is filled with the additional material to prevent the additional material from escaping when the cushion 363 is compressed.

In some embodiments, the first valve 367 can be used to fill the interior cavity 373 with an additional material. In such embodiments, the first valve 367 can be a two-way valve such that the first valve 367 can permit flow out of the interior cavity 373, in to the interior cavity 373, or a combination thereof. In embodiments where the first valve 367 is a two-way valve, the second valve 369 can be omitted.

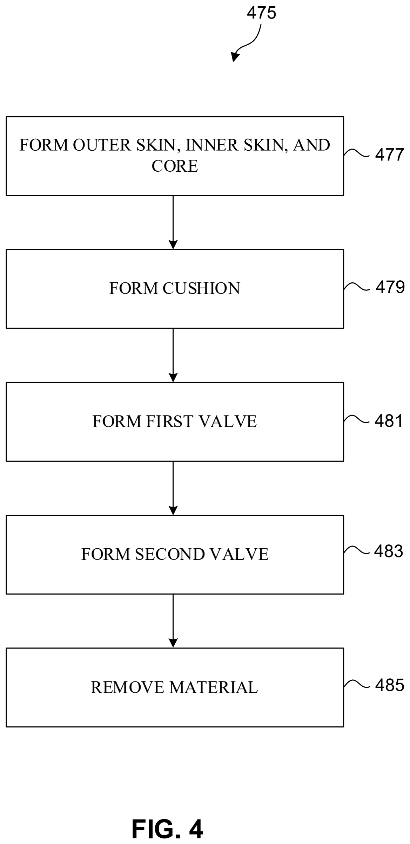

FIG. 4 shows a flowchart of a method 475 for forming the glove 300, according to some embodiments. Unless stated otherwise, the steps of the method 475 need not be performed in the order set forth herein. Additionally, unless specified otherwise, the steps need not be performed sequentially. The steps can be performed in a different order or simultaneously. For example, step 477 can be performed before, after, or concurrently with step 479. Further the method 475 may not comprise all the steps illustrated in FIG. 4. For example the method 475 may not comprise forming a second valve in step 483.

At step 477, an outer skin, inner skin, and core can be formed. For example, the outer skin 116, the inner skin 118, and any of the cores described herein can be formed using any of the additive manufacturing processes described herein to form the glove 300. In some embodiments, forming the outer skin 116, the inner skin 118, and the core at step 477 can comprise curing the outer skin 116, the inner skin 118, and the core.

At step 479, a cushion is formed. For example, the cushion 363 can be formed using the same additive manufacturing process used to form the outer skin 116, the inner skin 118, and the core. More specifically, forming the cushion 363 at step 479 can comprise forming the pouch 365 comprising the wall 371 and the interior cavity 373. In some embodiments, forming the cushion at step 479 can comprise curing the wall 371 such that the interior cavity 373 comprises a material in an uncured state and the wall 371 comprises the material in at least a partially cured state. In some embodiments, the material can comprise a resin. In some embodiments, the pouch 365 can comprise a disk shape, as described above.

At step 481, a first valve is formed. For example, the first valve 367 can be formed using the same additive manufacturing process used to form the cushion 363. In some embodiments, the first valve 367 can extend through the wall 371 and into the interior cavity 373. In some embodiments, the first valve 367 can permit flow out of the interior cavity 373. In some embodiments, the first valve 367 can comprise a one-way valve.

At step 483, a second valve is formed. For example, the second valve 369 can be formed using the same additive manufacturing process used to form the cushion 363. In some embodiments, the second valve 369 can extend through the wall 371 and into the interior cavity 373. In some embodiments, the second valve 369 can permit flow into the interior cavity 373. In some embodiments, the second valve 369 can comprise a one-way valve.

At step 485, material is removed from the interior cavity 373. In some embodiments, material in the uncured or partially cured state can be removed from the pouch 365 through the first valve 367. For example, in some embodiments, the pouch 365 can be compressed to force at least some of the material within the interior cavity 373 to flow out of the first valve 367. In some embodiments, as the pouch 365 returns to an uncompressed state, air can flow into the interior cavity 373 through the second valve 369.

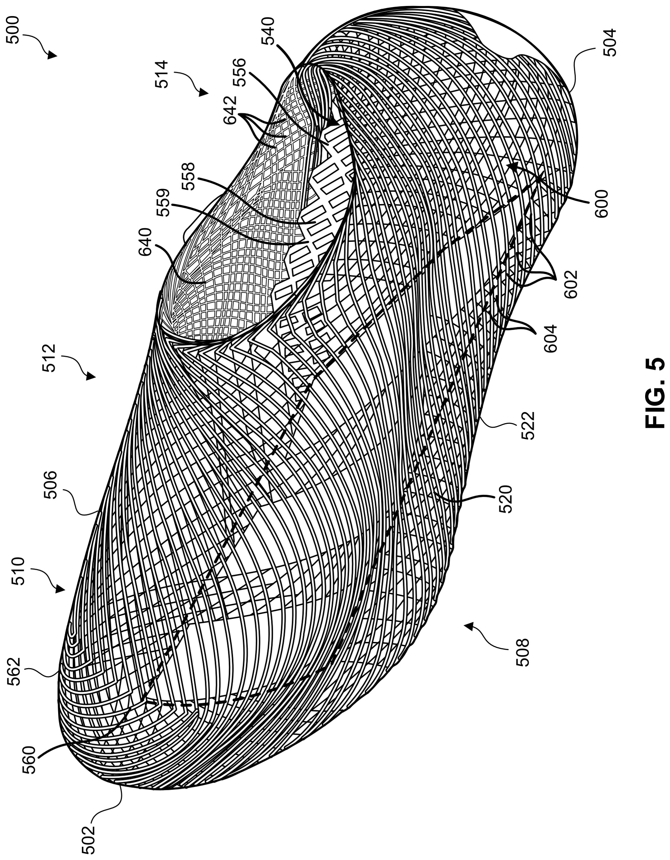

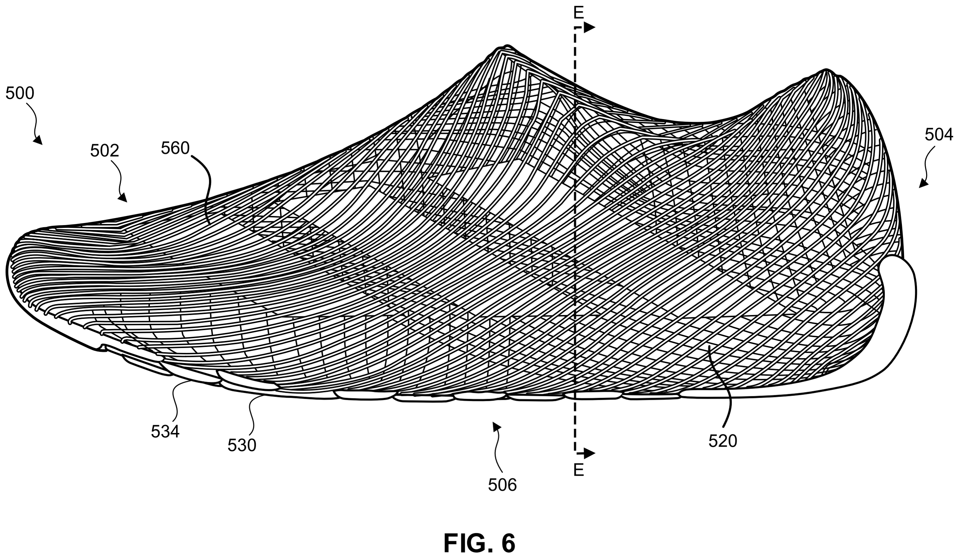

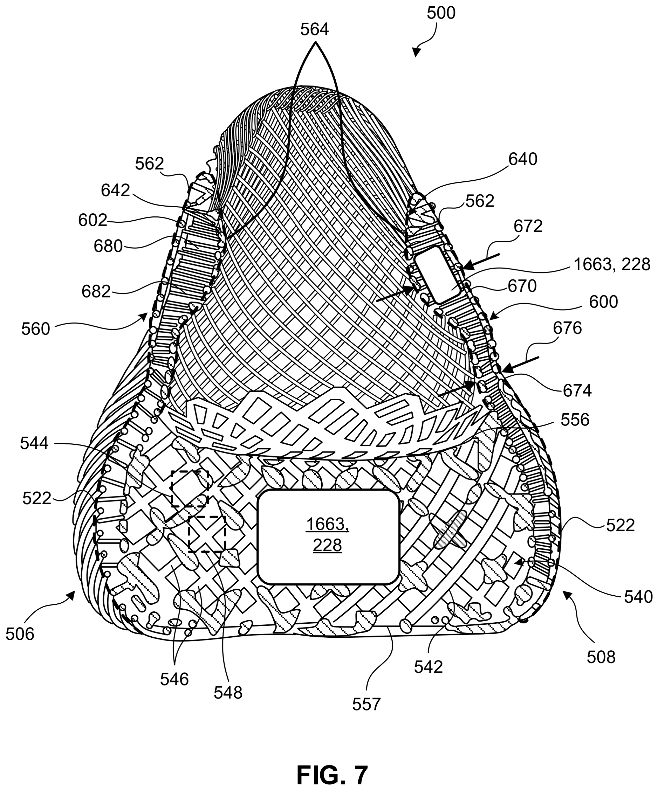

Cushions and pockets (for example, the cushion 363, the first pocket 228, and the second pocket 230) are described above as being a part of a glove (for example, being coupled to a glove or being integrally formed with a glove). In some embodiments, cushions and pockets can be used with various articles of apparel to provide similar advantages as those described above with respect to gloves. For example, cushions and/or pockets can be used with an article of footwear 500, shown for example in FIGS. 5-7. FIG. 5 shows a perspective view of the article of footwear 500. FIG. 6 shows a side view of the article of footwear 500 of FIG. 5, according to some embodiments. FIG. 7 shows a cross-sectional view of the article of footwear 500 of FIG. 6 along E-E, according to some embodiments.

Article of footwear 500 comprises a sole portion 520 and an upper portion 560. Sole portion 520 can define all of a portion of the sole of article of footwear 500 and upper portion 560 can define all or a portion of the upper of article of footwear 500.

Article of footwear 500 can comprise a forefoot end 502, a rearfoot end 504, a medial side 506, and a lateral side opposite medial side 506. Also, as shown for example in FIG. 5, article of footwear 500 can comprise a forefoot portion 510, a midfoot portion 512, and a rearfoot portion 514.

Sole portion 520 can comprise a midsole 540. In such embodiments, midsole 540 forms part of sole portion 520. In some embodiments, as shown for example in FIG. 7, midsole 540 can comprise a three-dimensional mesh 542 comprising a plurality of interconnected unit cells 544. Each interconnected unit cell 544 can comprise a plurality of unit cell struts 546 defining a three-dimensional structure and a plurality of nodes 548 at which one or more unit cell struts 546 are connected. Unit cells 544 can have the same characteristics as unit cells 110 described herein.

In some embodiments, a top surface of midsole 540 can comprise an insole skin 556. In some embodiments, insole skin 556 can comprise a network of beams 558 that intersect each other at intersection points 559, as illustrated in for example FIG. 5. In some embodiments, intersection points 559 can be located at nodes 548 of unit cells 544 of midsole 540. In embodiments comprising insole skin 556, beams 558 can comprise a smooth contour that does not oscillate between adjacent intersection points 559 with struts 546 of unit cells 544. In such embodiments, beams 558 can extend continuously in a straight or curved line between intersection points 559. In some embodiments, beams 558 of insole skin 556 may not define a portion of a repeating unit cell 544 for midsole 540. Rather, beams 558 of insole skin 556 can be integrally formed on repeating unit cells 544 of midsole 540.

In some embodiments, article of footwear 500 can comprise an outer skin 600 that defines at least part of an outer contour 562 of upper portion 560, at least part of an outer contour 522 of sole portion 520, or both at least part of an outer contour 562 of upper portion 560 and at least part of an outer contour 522 of sole portion 520. In some embodiments, outer skin 600 can comprise a plurality of continuous beams 602 extending adjacent to each other and defining at least part of outer contour 562 of upper portion 560, at least part of outer contour 522 of sole portion 520, or both. Space 604 between adjacent continuous beams 602 can separate adjacent continuous beams 602 from each other along at least a portion of sole portion 520, upper portion 560, or both. Continuous beams 602 of outer skin 600 may not define a portion of a repeating unit cell (for example, a unit cell 544 as described herein).

In some embodiments, one or more continuous beams 602 of outer skin 600 can extend from upper portion 560 to sole portion 520. In some embodiments, one or more continuous beams 602 of outer skin 600 can extend from upper portion 560 to sole portion 520 and extend across a ground-facing surface 534 of sole portion 520. In such embodiments, the one or more continuous beams 602 can form a portion of a ground-facing structure 530 for sole portion 520.

In some embodiments, article of footwear 500 can comprise an inner skin 640 defining at least part of an inner contour 564 of upper portion 560. In some embodiments, inner skin 640 can comprise beams 642 defining at least part of inner contour 564 of upper portion 560. In some embodiments, beams 642 can be the same as continuous beams 602. In such embodiments, beams 642 can comprise any feature of beams 602 as described herein. In some embodiments, inner skin 640 can comprise a network of beams 642 defining at least part of inner contour 564 of upper portion 560.

In some embodiments, as illustrated in, for example, FIG. 7, inner contour 564 of upper portion 560 can comprise an undulating contour that varies relative to outer contour 522 defined by outer skin 600. In such embodiments, the undulating inner contour 564 can comprise a first region 670 spaced apart from outer skin 600 by a first distance 672 and a second region 674 spaced apart from outer skin 600 by a second distance 676 less than the first distance 672. In such embodiments, a length of the struts connecting outer skin 600 to inner skin 640 in the first region 670 can be greater than a length of struts connecting outer skin 600 to inner skin 640 in second region 674.

In some embodiments, first distance 672 and second distance 676 can range from greater than or equal to 0.2 mm to less than or equal to 30 mm, including sub-ranges. For example, distance 672 and distance 676 can range from greater than or equal to 0.2 mm to less than or equal to 26 mm, from greater than or equal to 0.2 mm to less than or equal to 22 mm, from greater than or equal to 0.2 mm to less than or equal to 18 mm, from greater than or equal to 0.4 mm to less than or equal to 30 mm, from greater than or equal to 1 mm to less than or equal to 30 mm, or from greater than or equal to 2 mm to less than or equal to 30 mm. In some embodiments, distance 172 and distance 176 can range from greater than or equal to 0.4 mm to less than or equal to 26 mm.

In some embodiments, the second distance 676 can be at least 4 mm less than the first distance 672. As another example, in some embodiments, second distance 676 can be at least 10 mm less than the first distance 672.

Distances 672 and 676 can be varied to provide a targeted amount of cushioning and/or fit to different regions of upper portion 560. In addition, distances 672 and 676 can be varied based on the contour of a wearer's foot.

As illustrated in, for example, FIG. 7, article of footwear 500 can comprise a core structure 680 that connects outer skin 600 to inner skin 640. Core structure 680 can comprise struts 682 that connect beams 602 of outer skin 600 to beams 642 of inner skin 640. In some embodiments, core structure 680 can comprise struts 682 that directly connect a beam 602 of outer skin 600 to a beam 642 of inner skin 640. In such embodiments, a first end of a strut 682 can connect to a beam 602 at a first connection point and a second end of the strut 682 can connect to a beam 642 at a second connection point. In some embodiments, upper portion 560 can include one or more regions with core structure 680 and one or more regions without core structure 680. In regions without core structure 680, beams 602 of outer skin 600 can be directly connected to beams 642 of inner skin 640.

In some embodiments, struts 682 of core structure 680 can be linear struts that directly connect a beam 602 of outer skin 600 to a beam 642 of inner skin 640. In such embodiments, the linear struts can extend directly from a beam 602 of outer skin 600 to a beam 642 of inner skin 640 with changing direction at a node or turn. In some embodiments, struts 682 of core structure 680 can define unit cells (for example, unit cells 544) that connect beams 602 of outer skin 600 to beams 642 of inner skin 640. In such embodiments, the unit cells can comprise a plurality of struts (e.g., struts 546) that form a connection between a beam 602 of outer skin 600 and a beam 642 of inner skin 640.

As discussed herein, sole portion 520, upper portion 560, or both can be additively manufactured (3D printed) as a single piece (for example, using any of the methods described herein with reference to the description of FIGS. 1-3B) . Further, various components of article of footwear 500 can be additively manufactured (3D printed) as a single piece. Any two or more components of article of footwear 500 can be 3D printed as a single piece. For example, in embodiments comprising outer skin 600, inner skin 640, core structure 680, and midsole 540, each of sole portion 520, upper portion 560, outer skin 600, inner skin 640, core structure 680, and midsole 540 can be 3D printed as a single piece. As another example, in embodiments comprising outer skin 600, inner skin 640, and core structure 680, each of sole portion 520, upper portion 560, outer skin 600, inner skin 640, and core structure 680 can be 3D printed as a single piece. As another example, outer skin 600, inner skin 640, and core structure 680 can be 3D printed as a single piece.

In some embodiments, such as the embodiment shown in FIG. 7, the article of footwear 500 can comprise a cushion 363. In some embodiments, the cushion 363 can be located in the midsole 540. In some embodiments, the cushion 363 can be located in the insole skin 556. In some embodiments, the cushion 363 and the insole skin 556 can be integrally formed as a single part. In some embodiments, the cushion 363 can be located in an outsole skin 557. In some embodiments, the cushion 363 and the outsole skin 557 can be integrally formed as a single part.

In some embodiments, more than one of the cushion 363 can be located in the midsole 540. For example, two cushions 363 can be located in the midsole 540. As another example, three cushions 363 can be located in the midsole 540. In embodiments in which more than one cushion 363 is located in the midsole 540, the cushions 363 can be arranged in various ways. In some embodiments, the cushions 363 can be arranged in a linear manner from the medial side 506 to the lateral side 508. In some embodiments, the cushions 363 can be arranged such that the cushions 363 are equidistant from each other. In some embodiments, the cushions can be arranged such that the cushions 363 are not equidistant from each other (for example, two cushions 363 can be located on the lateral side 508 and one cushion 363 can be located on the medial side 506. In some embodiments, two or more cushions 363 can be vertically stacked in the midsole 540. In some embodiments, two or more groups of the vertically stacked cushions 363 can be located in various sections of the midsole 540. For example, a group of vertically stacked cushions 363 can be located on the medial side 506 of the midsole 540. As another example, a group of vertically stacked cushions 363 can be located on the lateral side 508 of the midsole 540. As another example, a group of vertically stacked cushions 363 can be located in a central portion of the midsole 540.

In some embodiments, the cushion 363 can be located in one or more of the first region 670 or the second region 674. Similar to the description above relative to the midsole 540, in some embodiments one or more cushions 363 can be located in the first region 670 or the second region 674 in the arrangements described (for example, a linear arrangement, a stacked arrangement, etc.).

In some embodiments, the cushion 363 can be implemented as a cushioning pod. In some embodiments, the cushioning pod can comprise a solid material (for example, a foam material). In some embodiments, the solid material can be softer than the material of the article of footwear 500. In some embodiments, the cushion 363 can be implemented as a bladder. In some embodiments, the bladder can be filled with air that can at least partially absorb energy from an impact. In some embodiments, the bladder can additionally or alternatively be filled with a liquid that can at least partially absorb energy from an impact.

In some embodiments, the article of footwear 500 can comprise a pocket such as the first pocket 228. In some embodiments, the article of footwear 500 can comprise the first pocket 228 instead of the cushion 363. In some embodiments, the article of footwear 500 can comprise the cushion 363 instead of the first pocket 228. In some embodiments, the article of footwear 500 can comprise one or more of the cushion 363 and one or more of the first pocket 228. In such embodiments, the cushions 363 and/or the first pockets 228 can be located in any of the positions and/or arrangements previously described with respect to the cushion 363.

In some embodiments, the first pocket 228 can be located in the midsole 540. In some embodiments, the first pocket 228 can be located in the insole skin 556. In some embodiments, the first pocket 228 and the insole skin 556 can be integrally formed as a single part. In some embodiments, the first pocket 228 can be located in the outsole skin 557. In some embodiments, the first pocket 228 and the outsole skin 557 can be integrally formed as a single part.

In some embodiments, more than one of the first pocket 228 can be located in the midsole 540. For example, two first pockets 228 can be located in the midsole 540. As another example, three first pockets 228 can be located in the midsole 540. In embodiments in which more than one first pocket 228 is located in the midsole 540, the first pockets 228 can be arranged in various ways. In some embodiments, the first pockets 228 can be arranged in a linear manner from the medial side 506 to the lateral side 508. In some embodiments, the first pocket 228 can be arranged such that the first pockets 228 are equidistant from each other. In some embodiments, the first pockets 228 can be arranged such that the first pockets 228 are not equidistant from each other (for example, two first pockets 228 can be located on the lateral side 508 and one first pocket 228 can be located on the medial side 506. In some embodiments, two or more first pockets 228 can be vertically stacked in the midsole 540. In some embodiments, two or more groups of the vertically stacked first pockets 228 can be located in various sections of the midsole 540. For example, a group of vertically stacked first pockets 228 can be located on the medial side 506 of the midsole 540. As another example, a group of vertically stacked first pockets 228 can be located on the lateral side 508 of the midsole 540. As another example, a group of vertically stacked first pockets 228 can be located in a central portion of the midsole 540.

In some embodiments, the first pocket 228 can be located in one or more of the first region 670 or the second region 674. Similar to the description above relative to the midsole 540, in some embodiments one or more first pockets 228 can be located in the first region 670 or the second region 674 in the arrangements described (for example, a linear arrangement, a stacked arrangement, etc.).

In some embodiments, the first pocket 228 can be implemented as a cushioning pod. In some embodiments, the cushioning pod can comprise a solid material (for example, a partially cured resin or a foam material). In some embodiments, the solid material can be softer than the material of the article of footwear 500. In some embodiments, the first pocket 228 can be implemented as a bladder. In such embodiments, the first pocket 228 can comprise a bladder filled with air that can at least partially absorb energy from an impact. In some embodiments, the first pocket 228 can additionally or alternatively be filled with a liquid that can at least partially absorb energy from an impact.

In some embodiments, any of the gloves or shoes described herein can have a personalized fit for the user. In some embodiments, the hand or foot of the user can be scanned (for example, using a three-dimensional scanning technology) to generate a three-dimensional computer model of the hand or foot of the user. Any of the gloves or shoes described herein can subsequently be manufactured (for example, using an additive manufacturing process) based on the three-dimensional computer model for a personalized fit for a specific user.

While various embodiments have been described herein, they have been presented by way of example, and not limitation. It should be apparent that adaptations and modifications are intended to be within the meaning and range of equivalents of the disclosed embodiments, based on the teaching and guidance presented herein. It therefore will be apparent to one skilled in the art that various changes in form and detail can be made to the embodiments disclosed herein without departing from the spirit and scope of the present disclosure. The elements of the embodiments presented herein are not necessarily mutually exclusive, but can be interchanged to meet various situations as would be appreciated by one of skill in the art.

The examples are illustrative, but not limiting, of the present disclosure. Other suitable modifications and adaptations of the variety of conditions and parameters normally encountered in the field, and which would be apparent to those skilled in the art, are within the spirit and scope of the disclosure.

It is to be understood that the phraseology or terminology used herein is for the purpose of description and not of limitation. The breadth and scope of the present disclosure should not be limited by any of the above-described exemplary embodiments, but should be defined in accordance with the following claims and their equivalents.

## Claims

1. An article of apparel, comprising:
an additively manufactured outer skin (116, 600) comprising a cured material;
an additively manufactured inner skin (118, 640) located opposite the additively manufactured outer skin (116, 600) and comprising the cured material;
an additively manufactured core comprising the cured material and extending between the additively manufactured outer skin (116, 600) and the additively manufactured inner skin (118, 640); and
a pocket (228, 230) at least partially surrounded by the additively manufactured core, the pocket (228, 230) comprising a filler (232) that comprises a partially cured form of the cured material,
wherein the additively manufactured outer skin (116, 600), the additively manufactured inner skin (118, 640), the additively manufactured core, and the pocket (228, 230) are integrally formed.

2. The article of apparel of claim 1, wherein each of the additively manufactured outer skin (116, 600), the additively manufactured inner skin (118, 640), and the additively manufactured core are stiffer than the filler (232).

3. The article of apparel of claim 1 or 2, wherein the pocket (228, 230) is entirely surrounded by the additively manufactured core.

4. The article of apparel of any one of the preceding claims, wherein the filler (232) comprises a first section (233) comprising a first partially cured form of the cured material and a second section (236) comprising a second partially cured form of the cured material,
wherein preferably the first partially cured form of the cured material and the second partially cured form of the cured material are each cured to different levels.

5. The article of apparel of any one of the preceding claims, wherein the article of apparel is a glove (100, 200, 300) or a shoe (500).

6. The article of apparel of claim 5, wherein the pocket (228, 230) is located in an upper of the shoe (500).

7. A method of forming an article of apparel, comprising:
forming, using an additive manufacturing process, an outer skin (116, 600), an inner skin (118, 640), and a core (120, 126) extending between the outer skin (116, 600) and the inner skin (118, 640);
forming a cushion (363) extending from the outer skin (116, 600), wherein forming the cushion (363) comprises:
forming, using the additive manufacturing process, a pouch (365) comprising a wall portion and an interior cavity (373), wherein the interior cavity (373) comprises a material in an uncured state and the wall portion comprises the material in at least a partially cured state;
forming, using the additive manufacture process, a first valve (367) that extends through the wall portion and into the interior cavity (373), wherein the first valve (367) permits flow out of the interior cavity (373); and
removing the material in the uncured state from the interior cavity (373) through the first valve (367).

8. The method of claim 7, comprising forming, using the additive manufacturing process, a second valve (369) that extends through the wall portion and into the interior cavity (373), wherein the second valve (369) permits air to flow into the interior cavity (373) such that air flows into the interior cavity (373) when the material in the uncured state is removed from the interior cavity (373) through the first valve (367), wherein preferably the first valve (367) and the second valve (369) each comprise a one-way valve.

9. The method of claim 7 or 8, wherein the pouch (365) comprises a disk shape.

10. An article of apparel, comprising:
an additively manufactured outer skin (116, 600);
an additively manufactured inner skin (118, 640);
an additively manufactured core disposed between the additively manufactured outer skin (116, 600) and the additively manufactured inner skin (118, 640) and extending from the additively manufactured inner skin (118, 640) and toward the additively manufactured outer skin (116, 600); and
a cushion (363) extending from the additively manufactured outer skin (116, 600), the cushion (363) comprising:
an additively manufactured pouch (365) comprising a wall (371) and an interior cavity (373), and
an additively manufactured first valve (367) extending through the wall (371) and into the interior cavity (373), wherein the additively manufactured first valve (367) permits flow out of the interior cavity (373).

11. The article of apparel of claim 10, wherein the cushion (363) comprises an additively manufactured second valve (369) extending through the wall (371) and into the interior cavity (373), wherein the additively manufactured second valve permits flow into the interior cavity (373).

12. The article of apparel of claim 11, wherein each of the additively manufactured first valve (367) and the additively manufactured second valve (369) comprise a one-way valve.

13. The article of apparel of any one of the preceding claims 10 to 12, wherein the additively manufactured pouch (365) comprises a disk shape.

14. The article of apparel of any one of the preceding claims 10 to 13, wherein the interior cavity (373) is at least partially filled with a resin.

15. The article of apparel of any one of the preceding claims 10 to 14, wherein the article of apparel is a glove (100, 200, 300) or a shoe (500), wherein the additively manufactured pouch (365) is preferably located in a sole of the shoe (500).
